# EUROPEAN PATENT SPECIFICATION

(11) **EP 4 280 052 B1**
(45) Date of publication and mention of the grant of the patent: **26.11.2025**
(21) Application number: 22878903.8
(22) Date of filing: 06.10.2022
(51) Int. Cl.: G06F 8/65, G06F 11/30, G06F 9/4401, G06F 8/41, H01M 10/42

(54) **FIRMWARE UPDATE SYSTEM OF BATTERY MANAGEMENT SYSTEM, AND METHOD RELATED THERETO**
FIRMWARE-AKTUALISIERUNGSSYSTEM EINES BATTERIEVERWALTUNGSSYSTEMS UND ZUGEHÖRIGES VERFAHREN
SYSTÈME DE MISE À JOUR DE MICROLOGICIEL D'UN SYSTÈME DE GESTION DE BATTERIE, ET PROCÉDÉ ASSOCIÉ

(30) Priority: 06.10.2021 KR 20210132752
(43) Date of publication of application: 22.11.2023
(73) Proprietor: LG Energy Solution, Ltd., Seoul 07335 (KR)
(72) Inventor: LEE, Ye Seul, Daejeon 34122 (KR); YANG, Seong Yeol, Daejeon 34122 (KR)
(74) Representative: Goddar, Heinz J.
(86) International application number: PCT/KR2022/015026
(87) International publication number: WO 2023/059082

(56) References cited:
- CN-B- 111 104 145
- JP-A- 2015 152 941
- KR-A- 20130 049 923
- KR-A- 20180 102 413
- KR-A- 20200 059 965
- KR-B1- 102 123 676
- US-A1- 2015 295 430
- ANONYMOUS: "Maximum transmission unit - Wikipedia", 10 September 2021 (2021-09-10), pages 1 - 6, XP093178655, Retrieved from the Internet <URL:https://en.wikipedia.org/w/index.php?title=Maximum_transmission_unit&oldid=1043558794>
- ANONYMOUS: "Network packet - Wikipedia", 20 September 2021 (2021-09-20), pages 1 - 4, XP093179123, Retrieved from the Internet <URL:https://en.wikipedia.org/w/index.php?title=Network_packet&oldid=1045414589>

## Description

### [Technical Field]

### TECHNICAL FIELD

Embodiments disclosed herein relate to a firmware update system in a battery data management system and a method therefor.

### [Background Art]

An energy storage system (ESS) is a device that improves power use efficiency by storing generated electricity in a storage device such as a battery and supplying power when needed, and includes a battery that stores electricity and components for efficiently managing and controlling the battery. Among those components, a battery management system (BMS) uses each sensor connected to a battery module to measure battery state information such as temperature, current, voltage, etc., and by doing so, plays a role of calculating data on dangerous problems such as overcharge or over discharge occurring in charge and/or discharge of the battery to control the temperature, current, voltage, etc., according to the state of the battery, thereby allowing the battery to operate in a stable state.

The BMS may include hardware that manages an operation of the battery and software that controls the hardware. Thus, for a more stable operation, the software of the BMS needs to be updated. The BMS may include a battery module management apparatus that monitors the state of each battery module and a battery pack management apparatus that manages the battery module management apparatus. When the software of the BMS is updated, the software of the battery pack management apparatus is updated and the battery pack management apparatus transmits update information to each battery module management apparatus. Each battery module management apparatus transmits state data of each connected battery module, etc., to the battery pack management apparatus to maintain the stable state of the BMS to allow collection of the information.

US 2015/295430 A1 discloses a battery management system having a plurality of battery power modules to define a smart battery system whereby a smart management module comprises embedded therein firmware and is configured to manage the battery power modules and perform an a firmware update of the battery power modules. The battery power modules monitor a state of the connected battery cells and transmit monitored data information to the smart management module.

CN 111 104 145 B discloses updating the firmware of a cloud computing device ("Expander") out-of-band by partitioning the firmware update into multiple parts and sending the parts to the cloud computing device.

The matters described as the background art are merely for improving the understanding of the background of the present disclosure, and should not be considered as acknowledging that they correspond to the prior art known to those of ordinary skill in the art.

### [Disclosure]

### [Technical Problem]

When a battery management system is updated, firmware updated in a battery pack management apparatus is transmitted to one or more battery module management apparatuses. The one or more battery module management apparatuses may monitor a state of each connected battery module and transmit monitored battery data information to a battery pack management apparatus. However, when the firmware updated in the battery pack management apparatus is transmitted to the one or more battery module management apparatuses, the battery module management apparatus is not able to transmit monitored battery data information to the battery pack management apparatus, such that some battery data information may be lost. When the size of update information of the firmware embedded in the battery pack management apparatus is sufficiently large, the amount of battery data information lost without being collected may be huge, disrupting an operation of the battery management system.

When the battery management system is updated, the firmware updated in the battery pack management apparatus is transmitted to the one or more battery module management apparatuses, and when some battery module management apparatuses have poor communication with the battery pack management apparatus, i.e., the battery module management device may fail to receive the updated firmware in a communication shadow area in relation to the battery pack management apparatus.

### [Technical Solution]

The present invention is defined according to the independent claims. Specific embodiments are defined in the dependent claims.

A battery management system according to an embodiment disclosed herein includes at least one battery module, one or more battery module management apparatuses respectively connected to the battery module, and a battery pack management apparatus having embedded therein firmware and configured to manage the one or more battery module management apparatuses, in which the battery pack management apparatus is further configured to divide the firmware to generate firmware packet information and transmit the divided firmware packet information to the one or more battery module management apparatuses, and the battery module management apparatus is further configured to monitor a state of the connected battery module and transmit monitored battery data information to the battery pack management apparatus.

According to an embodiment, the battery pack management apparatus may be further configured to transmit the non-divided firmware to the one or more battery module management apparatuses when a firmware batch download command is input according to a scheme designated in the battery pack management apparatus.

According to an embodiment, the battery pack management apparatus may be further configured to store length information of the firmware packet information transmitted to the battery module management apparatus.

According to an embodiment, the battery module management apparatus may be further configured to transmit the monitored battery data information to at least some of the other battery module management apparatuses.

According to an embodiment, the battery module management apparatus may be further configured to encode the monitored battery data information and the received divided firmware packet information together to generate encoding information and transmit the encoding information to at least some of the other battery module management apparatuses.

According to an embodiment, the battery module management apparatus may be further configured to identify the divided firmware packet information by using the battery data information and the encoding information received from another battery module management apparatus.

An operating method of a battery management system according to an embodiment disclosed herein includes dividing firmware embedded in a battery pack management apparatus to generate divided firmware packet information, transmitting, by the battery pack management apparatus, the divided firmware packet information to one or more battery module management apparatuses, and monitoring, by the one or more battery module management apparatuses, a state of the connected battery module and transmitting monitored battery data information to the battery pack management apparatus.

According to an embodiment, the operating method may further include transmitting the non-divided firmware to the one or more battery module management apparatuses when a firmware batch download command is input according to a scheme designated in the battery pack management apparatus.

According to an embodiment, the operating method may further include storing, by the battery pack management apparatus, length information of the firmware packet information transmitted to the battery module management apparatus.

According to an embodiment, the operating method may further include transmitting, by the battery module management apparatus, the monitored battery data information to at least some of the other battery module management apparatuses.

According to an embodiment, the operating method may further include encoding, by the battery module management apparatus, the monitored battery data information and the received divided firmware packet information to generate encoding information and transmitting the encoding information to at least some of the other battery module management apparatuses.

According to an embodiment, the operating method may further include identifying, by the battery module management apparatus, the divided firmware packet information by using the battery data information and the encoding information received from another battery module management apparatus.

A battery management system according to an embodiment disclosed herein includes one or more battery modules, one or more battery module management apparatuses respectively connected to the battery module, a battery pack management apparatus having embedded therein firmware and configured to manage the one or more battery module management apparatuses, and a controller connected to the battery module management apparatus and the battery pack management apparatus, in which the controller is configured to, by controlling the battery pack management apparatus, divide the firmware to generate firmware packet information and transmit the divided firmware packet information to the one or more battery module management apparatuses and, by controlling the battery module management apparatus, monitor a state of the connected battery module and transmit monitored battery data information to the battery pack management apparatus.

According to an embodiment, the controller may be further configured to, by controlling the battery pack management apparatus, transmit the non-divided firmware to the one or more battery module management apparatuses when a firmware batch download command is input according to a scheme designated in the battery pack management apparatus.

According to an embodiment, the controller may be further configured to, by controlling the battery pack management apparatus, store length information of the firmware packet information transmitted to the battery module management apparatus.

According to an embodiment, the controller may be further configured to, by controlling the battery module management apparatus, transmit the monitored battery data information to at least some of the other battery module management apparatuses.

According to an embodiment, the controller may be further configured to, by controlling the battery module management apparatus, encode the monitored battery data information and the received divided firmware packet information together to generate encoding information and transmit the encoding information to at least some of the other battery module management apparatuses.

According to an embodiment, the controller may be further configured to, by controlling the battery module management apparatus, identify the divided firmware packet information by using the battery data information and the encoding information received from another battery module management apparatus.

### [Advantageous Effects]

According to embodiments disclosed herein, a battery management system may be updated without a loss of battery data information even during driving of a battery module.

According to embodiments disclosed herein, when the battery management system is updated, even if there is a battery module management apparatus having poor communication with the battery pack management apparatus, another battery module management apparatus having normal communication with the battery pack management apparatus directly or indirectly receives received firmware packet information to identify the firmware packet information, thereby normally updating the battery management system.

Moreover, various effects recognized directly or indirectly from the disclosure may be provided.

### [Description of Drawings]

FIG. 1 is a block diagram of a general battery pack including a battery management apparatus according to an embodiment disclosed herein.
FIG. 2 shows a battery management apparatus according to an embodiment disclosed herein.
FIG. 3 is an operating flowchart illustrating an operating method of a battery management system, according to an embodiment disclosed herein.
FIG. 4 is an operating flowchart illustrating an operating method of a battery management system, according to an embodiment disclosed herein.
FIG. 5 is a diagram showing a data communication progress process over time in a battery management system, according to an embodiment disclosed herein.
FIG. 6 is a diagram showing a data communication progress process over time in a battery management system, according to an embodiment disclosed herein.
FIG. 7 is a functional block diagram of a battery management apparatus according to an embodiment disclosed herein.
FIG. 8 is an operating flowchart to consume battery energy, according to an embodiment disclosed herein.

With regard to the description of the drawings, similar reference numerals may be used to refer to similar or related components.

### [Mode for Invention]

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

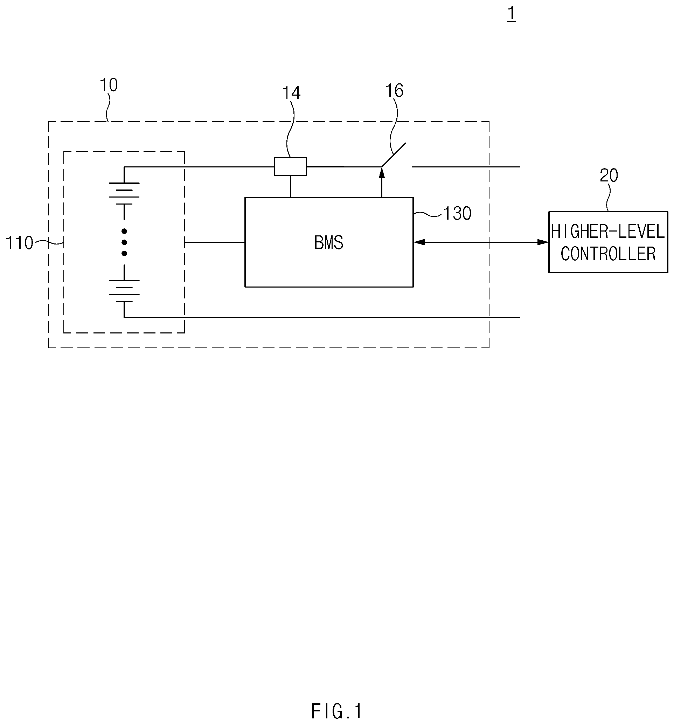

FIG. 1 is a block diagram of a general battery pack including a battery management apparatus according to an embodiment disclosed herein.

More specifically, FIG. 1 schematically shows a battery control system 1 including a battery pack 10 and a higher-level controller 20 included in a higher-level system according to an embodiment disclosed herein. In this case, the battery pack 10 shown in FIG. 1 may correspond to a component corresponding to the battery management system 100 disclosed herein.

As shown in FIG. 1, the battery pack 10 may include a plurality of battery modules 110, a sensor 14, a switching unit 16, and a battery pack management apparatus 130. The battery pack 10 may include the battery module 110, the sensor 14, the switching unit 16, and the battery pack management apparatus 130 provided in plural.

The plurality of battery modules 110 may include at least one chargeable/dischargeable battery cells. In this case, the plurality of battery modules 110 may be connected in series or in parallel.

The sensor 14 may detect current flowing in the battery pack 10. A detected signal may be transmitted to the battery pack management apparatus 130.

The switching unit 16 may be connected in series to a (+) terminal side or a (-) terminal side of the battery module 110 to control the charging/discharging current flow of the battery module 110. For example, the switching unit 16 may use at least one relay, a magnetic contactor, etc., according to the specifications of the battery pack 10.

The battery pack management apparatus 130 may monitor the voltage, current, temperature, etc., of the battery pack 10 to perform control and management to prevent overcharging and over discharging, etc., and may include, for example, a rack battery management system (RBMS).

The battery pack management apparatus 130, which is an interface for receiving measurement values of various parameter values described above, may include a plurality of terminals and a circuit, etc., connected to the terminals to process received values. The battery pack management apparatus 130 may control on/off of the switching unit 16, e.g., a relay, a contactor, etc., and may be connected to the battery module 110 to monitor the state of each battery module 110.

The higher-level controller 20 may transmit a control signal for controlling the battery module 110 to the battery pack management apparatus 130. Thus, the battery pack management apparatus 130 may also be controlled in terms of an operation thereof based on a control signal applied from the higher-level controller 20. Also, the battery module 110 may be a component included in an energy storage system (ESS). In this case, the higher-level controller 20 may be a controller (a bank battery management system (BBMS)) of a battery bank including the plurality of packs 10 or an ESS controller for controlling the entire ESS including a plurality of banks. However, the battery pack 10 is not limited to such a purpose.

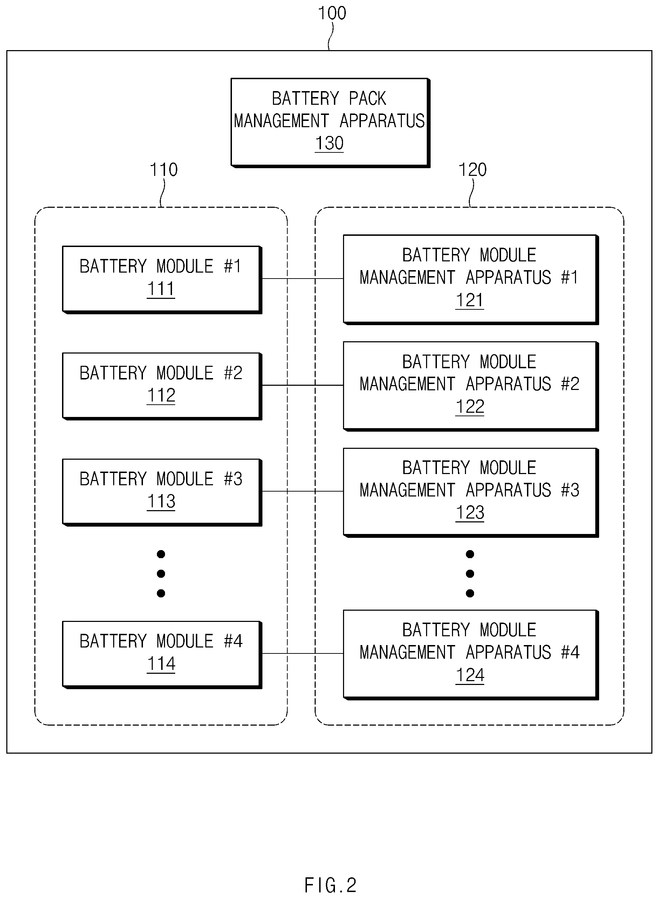

FIG. 2 shows a battery management apparatus according to an embodiment disclosed herein.

Referring to FIG. 2, the battery management system 100 may include one or more battery modules 110, a battery module management apparatus 120 managing each battery module, and the battery pack management apparatus 130 managing the battery module management apparatus. According to an embodiment disclosed herein, the number of battery module management apparatus and battery modules is not limited to the number of those shown in the drawing, and the number may be changed by adding or excluding battery module management apparatuses and battery modules, etc. In an example, the battery module 110 may correspond to a vehicle battery module. In an example, the battery pack management apparatus 130 may include firmware (F/W) embedded therein. In an example, the firmware embedded in the battery pack management apparatus 130 may correspond to vehicle firmware. In an example, data transmission or reception may be possible between the battery pack management apparatus 130 and the battery module management apparatus 120, and data transmission or reception between the one or more battery module management apparatuses 120 may be possible. For data transmission or reception according to an embodiment disclosed herein, the battery pack management apparatus 130 and the one or more battery module management apparatuses 120 may be connected through mutual wired or wireless communication, and the one or more battery module management apparatuses 120 may also be connected through mutual wired or wireless communication.

According to an embodiment disclosed herein, when the battery management system 100 is updated, the firmware embedded in the battery pack management apparatus 130 may be updated. The battery pack management apparatus 130 may transmit the entire updated firmware or a part thereof to the one or more battery module management apparatuses 120 to update the battery module management apparatus 120. In an example, the battery pack management apparatus 130 may transmit information corresponding to the updated part to the one or more battery module management apparatuses 120 in the updated firmware. According to an embodiment disclosed herein, when the battery pack management apparatus 130 may batch the entire updated firmware or a part thereof to the battery module management apparatus 120. In another example, the battery pack management apparatus 130 may divide the firmware to be transmitted to generate firmware packet information, and transmit the divided firmware packet information to the battery module management apparatus 120 several times.

The one or more battery module management apparatuses 120 may be connected to each of the one or more battery modules 110 to monitor the state of the battery module 110. In an example, the state information of the battery module 110 monitored by the battery module management apparatus 120 may correspond to battery related information such as a temperature T, a voltage V, a current **I,** a state of charge (SoC), a state of health (SoH), a state of power (SoP), etc., of the battery. In an example, a battery module management apparatus #1 121 may be connected to a battery module #1 111 to monitor the state of the battery module #1 111. In an example, a battery module management apparatuses #2 122 may be connected to a battery module #2 112 to monitor the state of the battery module #2 112. In an example, a battery module management apparatuses #3 123 may be connected to a battery module #3 113 to monitor the state of the battery module #3 113. In an example, a battery module management apparatuses #4 124 may be connected to a battery module #4 114 to monitor the state of the battery module #4 114. According to an embodiment disclosed herein, the number of battery module management apparatus and battery modules is not limited to the number of those shown in the drawing, and the number may be changed by adding or excluding battery module management apparatuses and battery modules, etc. As such, even when the number of battery module management apparatuses included in the battery management system 100 changes, an operation according to an embodiment disclosed herein may be performed in the same manner.

According to an embodiment disclosed herein, when the battery module management apparatus 120 monitors each connected battery module 110, the battery module management apparatus 120 may transmit the monitored battery data information to the battery pack management apparatus 130. In an example, the battery module management apparatus 120 may further transmit battery data information obtained by monitoring each connected battery module to at least some of the other battery module management apparatuses 120. According to a detailed example of the present disclosure, the battery module management apparatus #1 121 may transmit battery data information obtained by monitoring the battery module #1 111 to the battery pack management apparatus 130. According to a detailed example of the present disclosure, the battery module management apparatus #1 121 may further transmit battery data information obtained by monitoring the battery module #1 111 to at least any one of the other battery pack management apparatuses #2 122, #3 123, and #4 124. In an example, the battery module management apparatus #2 122, #3 123, or #4 124 may operate in the same manner to the battery module management apparatus #1 121 according to an embodiment disclosed herein.

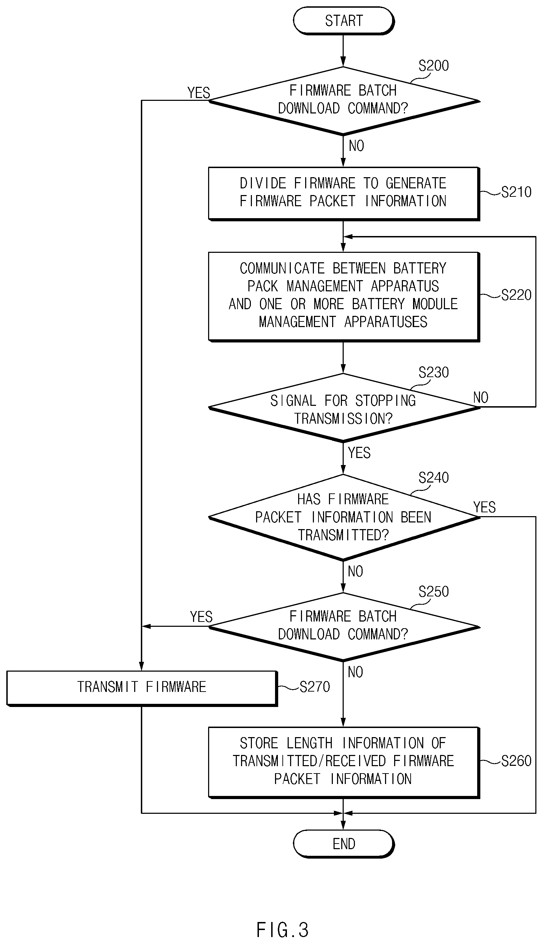

FIG. 3 is an operating flowchart illustrating an operating method of a battery management system, according to an embodiment disclosed herein. Operations of the operating flowchart shown below may be implemented by a battery management system or a component included therein (e.g., a controller 310).

Referring to FIG. 3, the battery management system 100 may perform operation S260 of transmitting firmware embedded in the battery pack management apparatus 130 to the one or more battery module management apparatuses 120 according to an embodiment disclosed herein, and operation S210 of dividing the firmware embedded in the battery pack management apparatus 130 to generate firmware packet information and operation S220 of communicating between the battery pack management apparatus 130 and the one or more battery module management apparatuses 120 by transmitting and receiving data therebetween according to another embodiment disclosed herein.

Operation S260 of transmitting, by the battery management system 100 according to an embodiment disclosed herein, the firmware embedded in the battery pack management apparatus 130 to the one or more battery module management apparatuses 120 may be performed when there is an input operation S200 or S250 of a firmware batch download command from a user to the battery management system 100.

Operation S200 may correspond to an operation in which the battery management system 100 receives, from the user, an input of whether to batch the updated firmware when the battery management system 100 according to an embodiment disclosed herein is converted from an off stage to an on stage or the firmware embedded in the battery pack management apparatus 130 is updated in the on stage. **In** an example, when the user inputs a batch download command of the updated firmware to the battery management system 100 through operation S200, the battery pack management apparatus 130 may transmit the entire updated firmware or a part thereof to the one or more battery module management apparatuses 120. **In** this case, in an example according to the present disclosure, when the battery pack management apparatus 130 transmits a part of the firmware to the one or more battery module management apparatuses 120, the transmitted part of the firmware may correspond to an updated part of the entire firmware configuration.

**In** operation S200 according to an embodiment disclosed herein, when it is determined that the battery management system 100 does not receive the batch download command of the firmware, the battery pack management apparatus 130 may divide the updated firmware to generate firmware packet information in operation S210. **In** an example, in operation S210, the battery pack management apparatus may divide the entire firmware having been updated or a part thereof to generate firmware packet information. **In** an example, when a part of the firmware having been updated is divided to generate firmware packet information, the part of the firmware may correspond to firmware information corresponding to the part updated from the existing firmware.

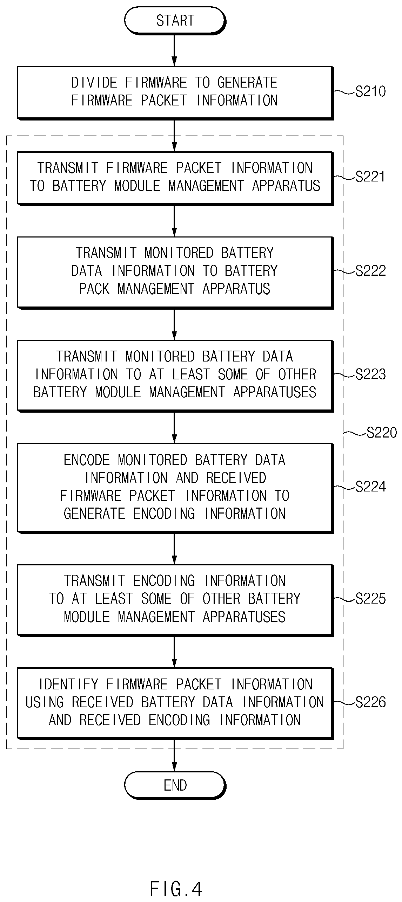

According to an embodiment disclosed herein, the battery pack management apparatus 130 may transmit the firmware packet information generated in operation S210 to the one or more battery module management apparatuses 120 several times, and the battery module management apparatus 120 may perform a communication operation related to data transmission and reception between the battery pack management apparatus and the one or more battery module management apparatuses by transmitting battery data information of a battery module monitored by the battery module management apparatus 120 to the battery pack management apparatus 130 or further transmitting the battery data information to the other battery module management apparatuses, in operation S220. A detailed description of operation S220 will be described in detail with reference to FIG. 4.

After operation S220 is performed according to an embodiment disclosed herein, the battery management system 100 may further perform an operation of determining whether a signal for stopping data transmission exists from an internal or external source of the system, in operation S230. For example, the signal for stopping data transmission in operation S230 may correspond to a signal for conversion to the off stage of the battery management system 100, input from the user. In another example, the signal for stopping data transmission in operation S230 may correspond to a signal for indicating that divided pieces of firmware packet information are transmitted from the battery pack management apparatus 130 to the battery module management apparatus 120. In an example, when it is determined that the signal for stopping data transmission does not exist in the battery management system 100, the battery pack management apparatus and the one or more battery module management apparatuses may repeat operation S220.

According to an embodiment disclosed herein, when it is determined that the signal for stopping data transmission exists in the battery management system 100, the battery management system 100 may perform an operation of determining whether all of the divided pieces of the firmware packet information have been transmitted to the battery module management apparatus 120 from the battery pack management apparatus 130, in operation S240. When it is determined in operation S240 that some or all of the divided pieces of the firmware packet information have not been transmitted to the battery module management apparatus 120, the battery management system 100 may receive a command of whether to batch the updated firmware from the user, in operation S250. For example, when it is determined in operation S240 that all of the divided pieces of the firmware packet information have been transmitted to the battery module management apparatus 120, the battery management system 100 may terminate update of firmware or be converted to the off stage thereof to terminate the system.

**In** operation S250 according to an embodiment disclosed herein, when it is determined that the battery management system 100 receives the firmware batch download command from the user, the battery management system 100 may perform operation S260 of transmitting the firmware embedded in the battery pack management apparatus 130 to the one or more battery module management apparatuses 120. In an example, when it is determined in operation S250 that the firmware batch download command is not input, the battery pack management apparatus 130 may further store the length information of the transmitted firmware packet information, in operation S270. In another example, when it is determined in operation S250 that the firmware batch download command is not input, the battery module management apparatus 120 may further store the length information of the received firmware packet information, in operation S270. According to an embodiment disclosed herein, by further storing the length information of the transmitted or received firmware packet information in operation S270 even when the battery management system 100 is terminated without completion of transmission of the firmware packet information to the battery module management apparatus 120, the battery management system 100 may merely transmit existing firmware packet information that has not been transmitted, when resuming the operation thereof. In this case, an advantage may be that it is possible to prevent unnecessary repetition of transmission of the existing firmware packet information having been transmitted.

Operation S260 according to an embodiment disclosed herein may correspond to an operation of transmitting the entire firmware embedded in the battery pack management apparatus 130 or a part thereof to the one or more battery module management apparatuses 120. In an example, operation S260 may correspond to an operation of transmitting, by the battery pack management apparatus 130, the entire updated firmware. In an example, operation S260 may correspond to an operation of transmitting, by the battery pack management apparatus 130, firmware information (i.e., a part of the updated firmware) corresponding to an updated part of the existing firmware. In an example, operation S260 may correspond to an operation of batching the entire firmware including transmitted pieces of the firmware packet information or a part thereof or an operation of batching the other pieces of the firmware packet information not transmitted, after the battery pack management apparatus 130 transmits some of the divided pieces of the firmware packet information.

FIG. 4 is an operating flowchart illustrating an operating method of a battery management system, according to an embodiment disclosed herein. Operations shown in FIG. 4 may correspond to a detailed example of operation S220 of FIG. 3. The battery management system may repeatedly perform operation S220 according to an embodiment disclosed herein and repeatedly perform operations shown in FIG. 4, which correspond to a detailed example of operation S220, in the same manner.

Referring to FIG. 4, an operating method of a battery management system according to the invention includes operation S210 of dividing firmware updated in the battery pack management apparatus 130 to generate firmware packet information and operation S221 of transmitting, by the battery pack management apparatus 130, the firmware packet information generated in operation S210 to the one or more battery module management apparatuses 120. According to the invention disclosed herein, when firmware to be transmitted by the battery pack management apparatus is divided into a total of N pieces of firmware packet information (N is a natural number greater than or equal to 2), then the battery pack management apparatus 130 may transmit each piece of the firmware packet information to the one or more battery module management apparatuses 120 over N times according to a designated order.

In an example, an order of transmitting each piece of the firmware packet information to the one or more battery module management apparatuses 120 during repetition of operation S221 may be designated as sequential transmission according to an order in which the firmware packet information is sequentially divided. In an example, an order of transmitting each piece of the firmware packet information to the one or more battery module management apparatuses 120 during repetition of operation S221 may be designated as an order in which the firmware packet information is transmitted from largest to smallest or an order in which the firmware packet information is transmitted from smallest to largest, depending on a size. In an example, an order of transmitting each piece of the firmware packet information to the one or more battery module management apparatuses 120 during repetition of operation S221 may be designated as following a scheme arbitrarily designed by a user. According to an embodiment disclosed herein, a total of N divided pieces of the firmware packet information (N is equal to or greater than 2) may be indicated by P₁, P₂, P₃, ..., P_{N} according to an order in which they are transmitted.

The operating method of the battery management system according to the invention includes the operation S222 of transmitting, by the one or more battery module management apparatuses 120, battery data information of each monitored battery module to the battery pack management apparatus 130 according to a designated order when the battery pack management apparatus 130 one piece of firmware packet information (e.g., Pₘ in which 1 ≤ m ≤ N) among pieces of the firmware packet information (e.g., P₁, P₂, P₃, ...., P_{N}) according to a designated order. In an example, battery data information obtained by monitoring, by the battery module management apparatus #1, 121, #2 122, #3 123, or #4 124, the battery module #1 111, #2 112, #3 113, or #4 114 connected thereto, may be referred to as Dₘ1, Dₘ2, Dₘ3, or Dₘ4. The battery management system according to the invention disclosed herein may perform operation S222 at a point before the battery pack management apparatus 130 transmits second firmware packet information (e.g., Pₘ₊₁), after transmitting first firmware packet information (e.g., Pₘ), to the one or more battery module management apparatuses 120. In this case, the one or more battery module management apparatuses 120 performs an operation of transmitting monitored battery data information (e.g., Dₘ1, Dₘ2, Dₘ3, or Dₘ4) to the battery pack management apparatus 130 even during transmission of the divided pieces of the firmware packet information, such that the amount of battery data information of each battery module 110, which may be lost during batch update of the battery management system 100, may be reduced.

The operating method of the battery management system may further include operation S223 of transmitting the battery data information (e.g., the data Dₘ1, Dₘ2, Dₘ3, or Dₘ4) obtained by monitoring, by the battery module management apparatus 120, each connected battery module 110, to at least some of the other battery module management apparatuses according to an embodiment disclosed herein. According to a detailed example of the present disclosure, the operating method may further include an operation of, by the battery module management apparatus #1 121, transmitting battery data information (e.g., data Dₘ1) obtained by monitoring the battery module #1 111 to at least any one of the other battery pack management apparatuses #2 122, #3 123, and #4 124. As various examples of operation S223, the battery module management apparatus #2 122, #3 123, or #4 124 may operate in the same manner to the battery module management apparatus #1 121 according to an example disclosed herein to further perform an operation of transmitting the monitored battery data information (e.g., the data Dₘ2, Dₘ3, or Dₘ4) of the battery module #2 112, #3 113, or #4 114 to at least some of the other battery module management apparatuses.

The operating method of the battery management system may further include operation S224 of collectively encoding the battery data information (e.g., the data Dₘ1, Dₘ2, Dₘ3, or Dₘ4) obtained by monitoring each connected battery module 110 in the battery module management apparatus 120 according to an embodiment disclosed herein and the firmware packet information (e.g., Pₘ) received by the battery module management apparatus 120 from the battery pack management apparatus 130 in a designated order according to an embodiment disclosed herein to generate encoding information. As a detailed example of operation S224, an operation may be further performed in which the battery module management apparatus #1 121 encodes the battery data information (e.g., the data Dₘ1) of the monitored battery module #1 and the received firmware packet information (e.g., Pₘ) to generate encoding information Iₘ1 when the divided firmware packet information (e.g., Pₘ) is transmitted to the one or more battery module management apparatuses 120 from the battery pack management apparatus 130. As a detailed example of operation S224, an operation may be further performed in which the battery module management apparatus #2 122, #3 123, or #4 124 operates in the same manner to the battery module management apparatus #1 121 according to an embodiment disclosed herein to generate each encoding information Iₘ2, Iₘ3, or Iₘ4.

The operating method of the battery management system may further include operation S225 of transmitting the encoding information (e.g., Iₘ1, Iₘ2, Iₘ3, or Iₘ4) generated in the one or more battery module management apparatuses 120 to at least some of the other battery module management apparatuses. **In** operation S225, when the encoding information (e.g., Iₘ1, Iₘ2, Iₘ3, or Iₘ4) generated by the one or more battery management modules 120 is transmitted, the encoding information may be further transmitted to the battery pack management apparatus 130.

According to a detailed example of operation S225, the battery module management apparatus #1 121 may transmit the encoding information (e.g., Iₘ1) generated in operation S224 to at least some of the other battery pack management apparatuses #2 122, #3 123, and #4 124. As a detailed example of operation S225, an operation may be further performed in which the battery module management apparatus #2 122, #3 123, or #4 124 operates in the same manner to the battery module management apparatus #1 121 according to an embodiment disclosed herein to transmit the generated encoding information (e.g., Iₘ2, Iₘ3, or Iₘ4) to at least some of the other battery module management apparatuses.

The operating method of the battery management system may further include operation S226 of identifying, by the battery module management apparatus according to an example disclosed herein, firmware packet information using battery data information and encoding information transmitted from the other battery module management apparatuses. As a detailed example of operation S226, the battery module management apparatus #2 122 may receive battery data information (e.g., Dₘ1, Dₘ3, and/or Dₘ4) of respectively monitored battery modules from the battery module management apparatuses #1 121, #3 123, and/or #4 124 according to an embodiment disclosed herein, and receive the encoding information (e.g., Iₘ1, Iₘ3, and/or Iₘ4) generated in the battery module management apparatuses #1 121, #3 123, and/or #4 124 according to an embodiment disclosed herein. In an example, when the battery data information (e.g., Dₘ1) monitored and the encoding information (e.g., Iₘ1) generated in the battery module management apparatus #1 121 are transmitted to the battery module management apparatus #2 122 according to an embodiment disclosed herein, the battery module management apparatus #2 122 may compare the received battery data information (e.g., Dₘ1) with a result of decoding the encoding information (e.g., Iₘ1) to identify the firmware packet information (e.g., Pₘ) transmitted from the battery pack management apparatus 130. According to an embodiment disclosed herein, even when the battery module management apparatus #2 122 fails to normally receive the firmware packet information (e.g., Pₘ) transmitted from the battery pack management apparatus 130, the battery module management apparatus #2 122 may identify the firmware packet information (e.g., Pₘ) by using the battery data information (e.g., Dₘ1) and the encoding information (e.g., Iₘ1) received from the battery module management apparatus #1 121, such that the battery management system 100 may normally perform updating. As such, even when the battery pack management apparatus 130 is in a poor communication state with a part of the battery module management apparatus 120, the battery management system 100 may normally perform updating.

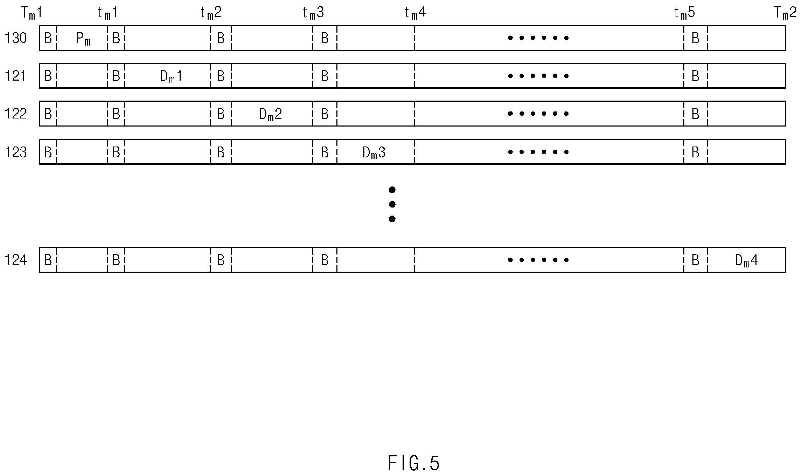

FIG. 5 is a diagram showing a data communication progress process over time in a battery management system, according to an embodiment disclosed herein. FIG. 5 may be referred to for description of operations S221, S222, and S223 shown in FIG. 4 according to an embodiment disclosed herein.

Referring to FIG. 5, the battery pack management apparatus 130 may transmit a beacon signal B to the one or more battery management apparatuses 120 or receive the beacon signal B from the one or more battery module management apparatuses 120 to transmit the divided firmware packet information to the one or more battery module management apparatuses 120 and receive the battery data information (e.g., Dₘ1, Dₘ2, Dₘ3, or Dₘ4) from the battery management apparatus 120. For example, the beacon signal may correspond to an informational beacon signal indicating position information of each of the battery pack management apparatus 130 or the one or more battery module management apparatus 120, etc. In an example, the beacon signal B may be transmitted before firmware packet information or each piece of battery data information is transmitted.

In an example, when the firmware embedded in the battery pack management apparatus 130 is divided into a total of N (N is a natural number equal to or greater than 2) pieces of firmware packet information, firmware packet information transmitted m^{th} in a designated order according to an embodiment disclosed herein may be referred to as Pₘ (1 ≤ m ≤ N). In an example, when the battery pack management apparatus 130 transmits the firmware packet information (e.g., Pₘ), the battery pack management apparatus 130 may receive each monitored battery module data (e.g., Dₘ1, Dₘ2, Dₘ3, or Dₘ4) from the one or more battery module management apparatuses 120 before transmitting firmware packet information (e.g., Pₘ+1) of the next order. In an example, Tₘ1, Tₘ2, Tₘ3, tₘ1, tₘ2, tₘ3, tₘ4, tₘ5, tₘ6, tₘ7, tₘ8, and tₘ9 described below may correspond to data values indicating time.

In an example, during a time from Tₘ1 to tₘ1, the battery pack management apparatus 130 may transmit the beacon signal B to the one or more battery module management apparatuses 120 and transmit the firmware packet information Pₘ. Each battery module management apparatus #1 121, #2 122, #3 123, or #4 124 may be in a state of receiving information transmitted from the battery pack management apparatus 130.

In an example, during a time from tₘ1 to tₘ2, the battery module management apparatus #1 121 may transmit the beacon signal B and battery data information Dₘ1 obtained by monitoring the battery module #1 111 to the battery pack management apparatus 130, and may further transmit the same information to at least some of the other battery module management apparatuses #2 122, #3 123, and #4 124. In this case, the battery pack management apparatus 130 or the other module management apparatuses #2 122, #3 123, and #4 124 may be in a state of receiving information transmitted from the battery module management apparatus #1 121.

In an example, during a time from tₘ2 to tₘ3, the battery module management apparatus #2 122 may transmit the beacon signal B and the battery data information Dₘ2 obtained by monitoring the battery module #2 122 to the battery pack management apparatus 130, and may further transmit the same information to at least some of the other battery module management apparatuses #1 121, #3 123, and #4 124. In this case, the battery pack management apparatus 130 or the other module management apparatuses #1 121, #3 123, and #4 124 may be in a state of receiving information transmitted from the battery module management apparatus #2 122.

In an example, during a time from tₘ3 to tₘ4, the battery module management apparatus #3 123 may transmit the beacon signal B and battery data information Dₘ3 obtained by monitoring the battery module #3 113 to the battery pack management apparatus 130, and may further transmit the same information to at least some of the other battery module management apparatuses #1 121, #2 122, and #4 124. In this case, the battery pack management apparatus 130 or the other module management apparatuses #1 121, #2 122, and #4 124 may be in a state of receiving information transmitted from the battery module management apparatus #3 123.

In an example, during a time from tₘ5 to Tₘ2, the battery module management apparatus #4 124 may transmit the beacon signal B and battery data information Dₘ4 obtained by monitoring the battery module #4 114 to the battery pack management apparatus 130, and may further transmit the same information to at least some of the other battery module management apparatuses #1 121, #2 122, and #3 123. In this case, the battery pack management apparatus 130 or the other module management apparatuses #1 121, #2 122, and #3 123 may be in a state of receiving information transmitted from the battery module management apparatus #4 124.

According to an embodiment disclosed herein, when the battery pack management apparatus 130 or any one of the one or more battery module management apparatuses 120 is in a state of transmitting data (e.g., Pₘ, Dₘ1, Dₘ2, Dₘ3, Dₘ4, etc.), the other apparatuses may be in a state of receiving transmitted data. According to an embodiment disclosed herein, an order in which the battery pack management apparatus 130 or any one of the one or more battery module management apparatuses 120 transmits the data (e.g., Pₘ, Dₘ1, Dₘ2, Dₘ3, Dₘ4, etc.) may be changed and designated at random. According to an embodiment disclosed herein, even when the number of battery module management apparatuses included in the battery management system 100 changes, an operation according to an embodiment disclosed herein may be performed in the same manner.

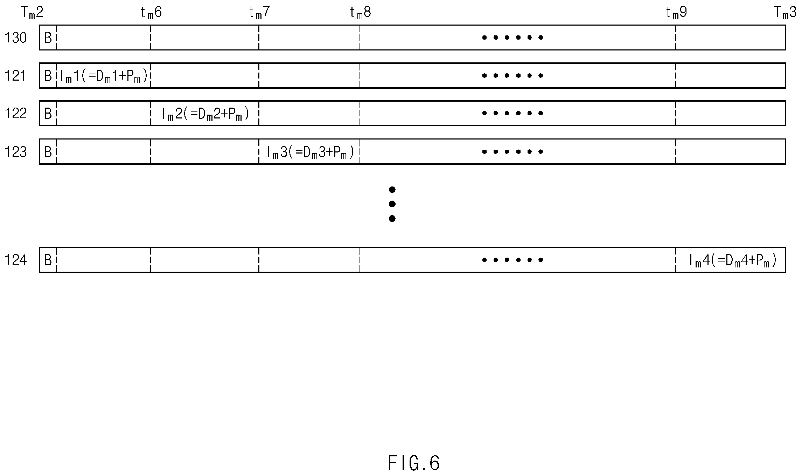

FIG. 6 is a diagram showing a data communication progress process over time in a battery management system, according to an embodiment disclosed herein. FIG. 6 may be referred to for description of operations S224, S225, and S226 shown in FIG. 4 according to an embodiment disclosed herein.

Referring to FIG. 6, the one or more battery module management apparatuses 120 may encode monitored battery data information of the battery module 110 and firmware packet information (e.g., Pₘ) received from the battery pack management apparatus 130 together to generate encoding information, and transmit each encoding information to at least some of the other battery module management apparatuses. According to an embodiment disclosed herein, the battery module management apparatus 120 may further transmit encoding information thereof to the battery pack management apparatus.

In an example, the battery module management apparatus #1 121 may encode the battery data information Dₘ1 obtained by monitoring the battery module #1 111 and the firmware packet information (e.g., Pₘ) received from the battery pack management apparatus 130 together to generate the encoding information Iₘ1. In an example, when the battery module management apparatus #1 121 generates the encoding information Iₘ1, the battery module management apparatus #1 121 may transmit the encoding information Iₘ1 to at least some of the other battery module management apparatuses #2 122, #3 123, and #4 124 during a time from Tₘ2 to tₘ6. In this case, the other module management apparatuses #2 122, #3 123, and #4 124 may be in a state of receiving information transmitted from the battery module management apparatus #1 121.

In an example, the battery module management apparatus #2 122 may encode the battery data information Dₘ2 obtained by monitoring the battery module #2 112 and the firmware packet information (e.g., Pₘ) received from the battery pack management apparatus 130 together to generate the encoding information Iₘ2. In an example, when the battery module management apparatus #2 122 generates the encoding information Iₘ2, the battery module management apparatus #2 122 may transmit the encoding information Iₘ2 to at least some of the other battery module management apparatuses #1 121, #3 123, and #4 124 during a time from tₘ6 to tₘ7. In this case, the other module management apparatuses #1 121, #3 123, and #4 124 may be in a state of receiving information transmitted from the battery module management apparatus #2 122.

In an example, the battery module management apparatus #3 123 may encode the battery data information Dₘ3 obtained by monitoring the battery module #3 113 and the firmware packet information (e.g., Pₘ) received from the battery pack management apparatus 130 together to generate the encoding information Iₘ3. In an example, when the battery module management apparatus #3 123 generates the encoding information Iₘ3, the battery module management apparatus #3 123 may transmit the encoding information Iₘ3 to at least some of the other battery module management apparatuses #1 121, #2 122, and #4 124 during a time from tₘ7 to tₘ8. In this case, the other module management apparatuses #1 121, #2 122, and #4 124 may be in a state of receiving information transmitted from the battery module management apparatus #3 123.

In an example, the battery module management apparatus #4 124 may encode the battery data information Dₘ4 obtained by monitoring the battery module #4 114 and the firmware packet information (e.g., Pₘ) received from the battery pack management apparatus 130 together to generate the encoding information Im4. In an example, when the battery module management apparatus #4 124 generates the encoding information Iₘ4, the battery module management apparatus #4 124 may transmit the encoding information Iₘ4 to at least some of the other battery module management apparatuses #1 121, #2 122, and #3 123 during a time from tₘ8 to Tₘ3. In this case, the other module management apparatuses #1 121, #2 122, and #3 123 may be in a state of receiving information transmitted from the battery module management apparatus #4 124.

When the one or more battery module management apparatuses receive the battery data information (e.g., Dₘ1, Dₘ2, Dₘ3, or Dₘ4) and the encoding information (e.g., Iₘ1, Iₘ2, Iₘ3, or Iₘ4) from the other battery module management apparatuses, the firmware packet information (e.g., Pₘ) may be identified using the received battery data information and encoding information. In an example, when the battery module management apparatus #2 122 receives the battery data information (e.g., Dₘ2) and the encoding information (e.g., Iₘ2) from the battery module management apparatus #1 121, the received encoding information (e.g., Iₘ2) may be decoded and decoding result data may be compared with the battery data information (e.g., Dₘ2) to identify the firmware packet information (e.g., Pₘ). In this case, even when the battery module management apparatus #2 122 may not be able to normally perform data communication with the battery pack management apparatus 130 and thus may fail to directly receive firmware packet information, the firmware packet information may be identified by using the received battery data information and encoding information, thereby normally performing updating of the battery management system 100. In an example, the battery module management apparatus #1 121, #3 123, or #4 124 may operate in the same manner to the battery module management apparatus #2 122 according to an embodiment disclosed herein.

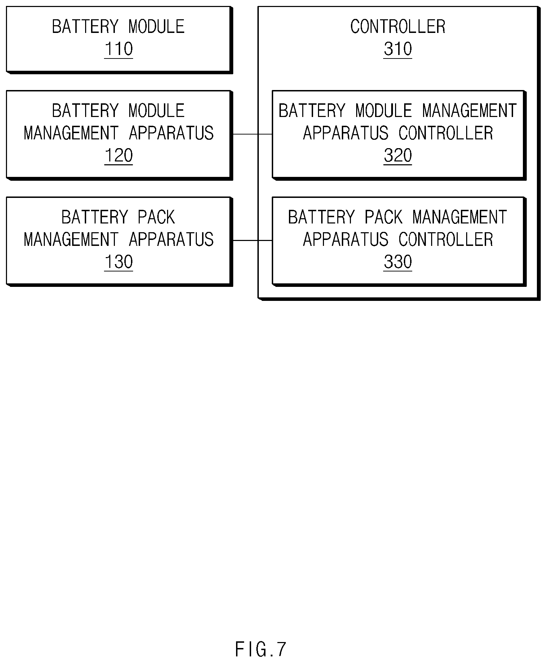

FIG. 7 is a functional block diagram of a battery management apparatus according to an embodiment disclosed herein. A component shown in FIG. 7 may be a hardware device or a program (or an application) including instructions.

The controller 310 may be a hardware device such as a processor or a central processing unit (CPU) or a program implemented by the hardware device. The controller 310 may be connected to components of the battery management system to perform an overall function of the battery management system. In an embodiment, the controller 310 may control the battery module management apparatus 120 to monitor a state of each connected battery module and to transmit monitored battery data information to the battery pack management apparatus 130. In an embodiment, the controller may control the battery pack management apparatus 130 to divide the firmware embedded in the battery pack management apparatus to generate firmware packet information and to transmit the divided firmware packet information to each battery module management apparatus 120.

In an embodiment, the controller 310 may be further configured to, by controlling the battery pack management apparatus 130, transmit the non-divided firmware to the one or more battery module management apparatuses 120 when a firmware batch download command is input according to a scheme designated in the battery pack management apparatus. In this case, a description of FIGS. 2 to 4 will be referred to in relation to the designated scheme of the firmware batch download command.

In an embodiment, the controller 310 may be further configured to, by controlling the battery pack management apparatus 130, transmit length information of the firmware packet information to the battery module management apparatus to be stored. In this case, a description of FIG. 3 will be referred to in relation to the operation of storing the length information.

In an embodiment, the controller 310 may be further configured to, by controlling the battery module management apparatus 120, transmit the monitored battery data information to at least some of the other battery module management apparatuses. In this case, a description of FIGS. 2 to 5 will be referred to in relation to the operation of transmitting the battery data information.

In an embodiment, the controller 310 may be further configured to, by controlling the battery module management apparatus 120, encode the monitored battery data information together with the firmware packet information from the battery pack management apparatus 130 to generate encoding information, and to transmit the generated encoding information to at least some of the other battery module management apparatuses. In this case, a description of FIGS. 2 to 6 will be referred to in relation to the operation of encoding and transmitting the encoding information.

In an embodiment, the controller 310 may be further configured to, by controlling the battery module management apparatus 120, identify the divided firmware packet information transmitted by the battery pack management apparatus 130 using the battery data information and the encoding information received from the other battery module management apparatuses. In this case, a description of FIGS. 2 to 6 will be referred to in relation to the operation of identifying the firmware packet information using the received battery data information and encoding information.

The controller 310 may control each component of the battery management system and to this end, the controller 310 may include a battery module management apparatus controller 320 and/or a battery pack management apparatus controller 330. Components included in the controller 310 may be implemented with individual devices (or programs) or as one integrated module.

Even though all components constituting an embodiment disclosed herein have been described above as being combined into one or operating in combination, the embodiments disclosed herein are not necessarily limited to the embodiments. That is, within the object scope of the embodiments disclosed herein, all the components may operate by being selectively combined into one or more.

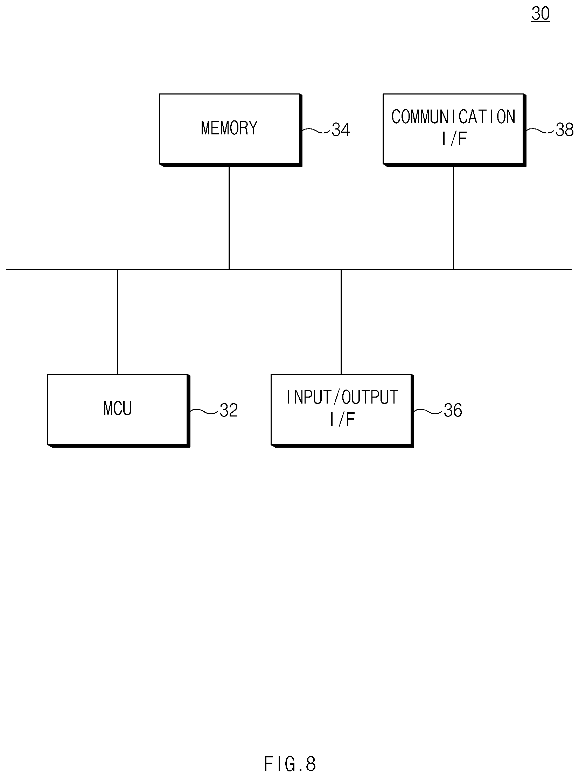

FIG. 8 is an operating flowchart to consume battery energy, according to an embodiment disclosed herein.

Referring to FIG. 8, a computing system 30 according to an embodiment disclosed herein may include an MCU 32, a memory 34, an input/output I/F 36, and a communication I/F 38.

The MCU 32 may be a processor that executes various programs (e.g., a feature calculation program, a class classification and lifespan estimation program, etc.) stored in the memory 34, processes various data including voltage, current, etc., of a battery cell through these programs, and executes the above-described functions of the battery management apparatus shown in FIGS. 2 to 7.

The memory 34 may store various programs regarding feature calculation, class classification, and lifespan estimation of the battery cell. Moreover, the memory 34 may store various data such as a voltage, a current, feature data, etc., of each battery cell.

The memory 34 may be provided in plural, depending on a need. The memory 34 may be volatile memory or non-volatile memory. For the memory 34 as the volatile memory, random access memory (RAM), dynamic RAM (DRAM), static RAM (SRAM), etc., may be used. For the memory 34 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 34 are merely examples and are not limited thereto.

The input/output I/F 36 may provide an interface for transmitting and receiving data by connecting an input device (not shown) such as a keyboard, a mouse, a touch panel, etc., and an output device such as a display (not shown), etc., to the MCU 32.

The communication I/F 38, which is a component capable of transmitting and receiving various data to and from a server, may be various devices capable of supporting wired or wireless communication. For example, a program for feature calculation, class classification, and lifespan estimation for a battery cell or various data, etc., may be transmitted and received to and from a separately provided external server through the communication I/F 38.

As such, a computer program according to an embodiment disclosed herein may be recorded in the memory 34 and processed by the MCU 32, thus being implemented as a module that performs functions shown in FIG. 3 or 4.

Moreover, terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

## Claims

1. A battery management system (100) comprising:
at least one battery module (110);
one or more battery module management apparatuses (120) respectively connected to the battery module (110); and
a battery pack management apparatus (130) having embedded therein firmware and configured to manage the one or more battery module management apparatuses (120),
wherein the battery pack management apparatus (130) is further configured to divide the firmware to generate N firmware packet information and transmit the divided firmware packet information to the one or more battery module management apparatuses (120), and
wherein the battery module management apparatus (120) is further configured to monitor a state of the connected battery module (110) and transmit monitored battery data information to the battery pack management apparatus (130) according to a designated order when the battery pack management apparatus transmits one piece of firmware packet information (Pₘ in which 1 ≤ m ≤ N) among pieces of the firmware packet information (P₁, P₂, P₃, ...., P_{N}) according to a designated order, and N is a natural number greater than or equal to 2,
wherein the transmission of the monitored battery data information is performed at a point before the battery pack management apparatus transmits a second firmware packet information (Pₘ₊₁), after transmitting a first firmware packet information (Pₘ), to the one or more battery module management apparatuses.

2. The battery management system (100) of claim 1, wherein the battery pack management apparatus (130) is further configured to transmit the non-divided firmware to the one or more battery module management apparatuses (120) when a firmware batch download command is input according to a scheme designated in the battery pack management apparatus (130).

3. The battery management system (100) of claim 1, wherein the battery pack management apparatus (130) is further configured to store length information of the firmware packet information transmitted to the battery module management apparatus (120).

4. The battery management system (100) according to any one of claims 1 to 3, wherein the battery module management apparatus (120) is further configured to transmit the monitored battery data information to at least some of the other battery module management apparatuses (120).

5. The battery management system (100) of claim 4, wherein the battery module management apparatus (120) is further configured to encode the monitored battery data information and the received divided firmware packet information together to generate encoding information and transmit the encoding information to at least some of the other battery module management apparatuses (120).

6. The battery management system (100) of claim 5, wherein the battery module management apparatus (120) is further configured to identify the divided firmware packet information by using the battery data information and the encoding information received from another battery module management apparatus (120).

7. The battery management system (100) according to any one of claims 1 to 6 further comprising:
a controller (310) configured to control the battery pack management apparatus (130) and the one or more battery module management apparatuses (120).

8. An operating method of a battery management system (100), the operating method comprising:
dividing (S210) firmware embedded in a battery pack management apparatus to generate N divided firmware packet information;
transmitting (S221), by the battery pack management apparatus, the divided firmware packet information to one or more battery module management apparatuses; and
monitoring, by the one or more battery module management apparatuses, a state of the connected battery module and transmitting (S222) monitored battery data information to the battery pack management apparatus according to a designated order when the battery pack management apparatus transmits one piece of firmware packet information (Pₘ in which 1 ≤ m ≤ N) among pieces of the firmware packet information (P₁, P₂, P₃, ...., P_{N}) according to a designated order, and N is a natural number greater than or equal to 2,
wherein the transmitting (S222) is performed at a point before the battery pack management apparatus transmits a second firmware packet information (Pₘ₊₁), after transmitting a first firmware packet information (Pₘ), to the one or more battery module management apparatuses.

9. The operating method of claim 8, further comprising transmitting (S223) the non-divided firmware to the one or more battery module management apparatuses when a firmware batch download command is input according to a scheme designated in the battery pack management apparatus.

10. The operating method of claim 8, further comprising storing, by the battery pack management apparatus, length information of the firmware packet information transmitted to the battery module management apparatus.

11. The operating method according to any one of claims 8 to 10, further comprising transmitting, by the battery module management apparatus, the monitored battery data information to at least some of the other battery module management apparatuses.

12. The operating method of claim 11, further comprising:
encoding (S224), by the battery module management apparatus, the monitored battery data information and the received divided firmware packet information to generate encoding information; and
transmitting (S225) the encoding information to at least some of the other battery module management apparatuses.

13. The operating method of claim 12, further comprising identifying (S226), by the battery module management apparatus, the divided firmware packet information by using the battery data information and the encoding information received from another battery module management apparatus.

## Patentansprüche

1. Batteriemanagementsystem (100) aufweisend:
mindestens ein Batteriemodul (110);
eine oder mehrere Batteriemodulmanagementvorrichtungen (120), die mit dem jeweiligen Batteriemodul (110) verbunden sind; und
eine Batteriepackmanagementvorrichtung (130) aufweisend darin eingebettete Firmware und konfiguriert, um die eine oder die mehreren Batteriemodulmanagementvorrichtungen (120) zu verwalten,
wobei die Batteriepackmanagementvorrichtung (130) ferner konfiguriert ist, um die Firmware aufzuteilen, um N Firmwarepaketinformationen zu erzeugen und die geteilten Firmwarepaketinformationen an die eine oder die mehreren Batteriemodulmanagementvorrichtungen (120) zu übertragen, und
wobei die Batteriemodulmanagementvorrichtung (120) ferner konfiguriert ist, um einen Zustand des verbundenen Batteriemoduls (110) zu überwachen und überwachte Batteriedateninformationen an die Batteriepackmanagementvorrichtung (130) gemäß einer bestimmten Reihenfolge zu übertragen, wenn die Batteriepackmanagementvorrichtung ein Stück von Firmwarepaketinformationen (Pₘ, wobei 1 ≤ m ≤ N) unter Stücken der Firmwarepaketinformationen (P₁, P₂, P₃, ..., P_{N}) gemäß einer bestimmten Reihenfolge überträgt, und N eine natürliche Zahl größer oder gleich 2 ist,
wobei die Übertragung der überwachten Batteriedateninformationen an einem Punkt durchgeführt wird, bevor die Batteriepackmanagementvorrichtung eine zweite Firmwarepaketinformation (Pₘ₊₁) nach dem Übertragen einer ersten Firmwarepaketinformation (Pₘ) an die eine oder die mehreren Batteriemodulmanagementvorrichtungen überträgt.

2. Batteriemanagementsystem (100) nach Anspruch 1, wobei die Batteriepackmanagementvorrichtung (130) ferner konfiguriert ist, um die nicht-aufgeteilte Firmware an die eine oder die mehreren Batteriemodulmanagementvorrichtungen (120) zu übertragen, wenn ein Firmwarestapeldownloadbefehl gemäß einem in der Batteriepackmanagementvorrichtung (130) bestimmten Schema eingegeben wird.

3. Batteriemanagementsystem (100) nach Anspruch 1, wobei die Batteriepackmanagementvorrichtung (130) ferner konfiguriert ist, um Längeninformationen der an die Batteriemodulmanagementvorrichtung (120) übertragenen Firmwarepaketinformationen zu speichern.

4. Batteriemanagementsystem (100) nach einem der Ansprüche 1 bis 3, wobei die Batteriemodulmanagementvorrichtung (120) ferner konfiguriert ist, um die überwachten Batteriedateninformationen an mindestens einige der anderen Batteriemodulmanagementvorrichtungen (120) zu übertragen.

5. Batteriemanagementsystem (100) nach Anspruch 4, wobei die Batteriemodulmanagementvorrichtung (120) ferner konfiguriert ist, um die überwachten Batteriedateninformationen und die empfangenen aufgeteilten Firmwarepaketinformationen zusammen zu codieren, um Codierungsinformationen zu erzeugen und die Codierungsinformationen an mindestens einige der anderen Batteriemodulmanagementvorrichtungen (120) zu übertragen.

6. Batteriemanagementsystem (100) nach Anspruch 5, wobei die Batteriemodulmanagementvorrichtung (120) ferner konfiguriert ist, um die aufgeteilten Firmwarepaketinformationen unter Verwendung der Batteriedateninformationen und der von einer anderen Batteriemodulmanagementvorrichtung (120) empfangenen Codierungsinformationen zu identifizieren.

7. Batteriemanagementsystem (100) nach einem der Ansprüche 1 bis 6, ferner aufweisend:
eine Steuerung (310), die konfiguriert ist, um die Batteriepackmanagementvorrichtung (130) und die eine oder die mehreren Batteriemodulmanagementvorrichtungen (120) zu steuern.

8. Betriebsverfahren eines Batteriemanagementsystems (100), wobei das Betriebsverfahren umfasst:
Aufteilen (S210) von Firmware, die in eine Batteriepackmanagementvorrichtung eingebettet ist, um N aufgeteilte Firmwarepaketinformationen zu erzeugen;
Übertragen (S221), durch die Batteriepackmanagementvorrichtung, der aufgeteilten Firmwarepaketinformationen an eine oder mehrere Batteriemodulmanagementvorrichtungen; und
Überwachen, durch die eine oder die mehreren Batteriemodulmanagementvorrichtungen, eines Zustands des verbundenen Batteriemoduls und Übertragen (S222) von überwachten Batteriedateninformationen an die Batteriepackmanagementvorrichtung gemäß einer bestimmten Reihenfolge, wenn die Batteriepackmanagementvorrichtung ein Stück von Firmwarepaketinformationen (Pₘ, wobei 1 ≤ m ≤ N) unter Stücken der Firmwarepaketinformationen (P₁, P₂, P₃, ..., P_{N}) gemäß einer bestimmten Reihenfolge überträgt, und N eine natürliche Zahl größer oder gleich 2 ist,
wobei das Übertragen (S222) an einem Punkt durchgeführt wird, bevor die Batteriepackmanagementvorrichtung eine zweite Firmwarepaketinformation (Pₘ₊₁) nach dem Übertragen einer ersten Firmwarepaketinformation (Pₘ) an die eine oder die mehreren Batteriemodulmanagementvorrichtungen überträgt.

9. Betriebsverfahren nach Anspruch 8, ferner umfassend Übertragen (S223) der nichtaufgeteilten Firmware an die eine oder die mehreren Batteriemodulmanagementvorrichtungen, wenn ein Firmwarestapeldownloadbefehl gemäß einem in der Batteriepackmanagementvorrichtung bestimmten Schema eingegeben wird.

10. Betriebsverfahren nach Anspruch 8, ferner umfassend Speichern, durch die Batteriepackmanagementvorrichtung, von Längeninformationen der an die Batteriemodulmanagementvorrichtung übertragenen Firmwarepaketinformationen.

11. Betriebsverfahren nach einem der Ansprüche 8 bis 10, ferner umfassend Übertragen, durch die Batteriemodulmanagementvorrichtung, der überwachten Batteriedateninformationen an mindestens einige der anderen Batteriemodulmanagementvorrichtungen.

12. Betriebsverfahren nach Anspruch 11, ferner umfassend:
Codieren (S224), durch die Batteriemodulmanagementvorrichtung, der überwachten Batteriedateninformationen und der empfangenen aufgeteilten Firmwarepaketinformationen, um Codierungsinformationen zu erzeugen; und
Übertragen (S225) der Codierungsinformationen an mindestens einige der anderen Batteriemodulmanagementvorrichtungen.

13. Betriebsverfahren nach Anspruch 12, ferner umfassend Identifizieren (S226), durch die Batteriemodulmanagementvorrichtung, der aufgeteilten Firmwarepaketinformationen unter Verwendung der Batteriedateninformationen und der von einer anderen Batteriemodulmanagementvorrichtung empfangenen Codierungsinformationen.

## Revendications

1. Système de gestion de batterie (100), comprenant :
au moins un module de batterie (110) ;
un ou plusieurs appareils de gestion de module de batterie (120) connectés respectivement au module de batterie (110) ; et
un appareil de gestion de bloc-batterie (130) comprenant un logiciel embarqué intégré et configuré pour gérer l'un ou plusieurs appareils de gestion de module de batterie (120),
l'appareil de gestion de bloc-batterie (130) étant configuré en outre pour diviser le logiciel embarqué afin de générer N informations de paquet du logiciel embarqué, et transmettre les informations de paquet divisées du logiciel embarqué à l'un ou plusieurs appareils de gestion de module de batterie (120), et
l'appareil de gestion de module de batterie (120) étant configuré en outre pour contrôler un état du module de batterie connecté (110) et transmettre les informations de données pour la batterie contrôlée à l'appareil de gestion de bloc-batterie (130) selon un ordre désigné lorsque l'appareil de gestion de bloc-batterie transmet une information de paquet de logiciel embarqué (Pₘ , où 1 ≤ m ≤ N) parmi des éléments d'information de paquet de logiciel embarqué (P₁, P₂, P₃, ...., P_{N}) selon un ordre désigné, et N étant un nombre naturel supérieur ou égal à 2,
la transmission des informations de données pour la batterie contrôlée étant effectuée en un point avant la transmission, par l'appareil de gestion de bloc-batterie, de deuxièmes informations de paquet de logiciel embarqué (Pₘ₊₁) suivant la transmission d'un premier paquet d'informations de logiciel embarqué (Pₘ), à l'un ou plusieurs appareils de gestion de module de batterie.

2. Système de gestion de batterie (100) selon la revendication 1, l'appareil de gestion de bloc-batterie (130) étant configuré en outre pour transmettre le logiciel embarqué non divisé à l'un ou plusieurs appareils de gestion de module de batterie (120) lorsqu'une commande de téléchargement par lots du logiciel embarqué est entrée selon un schéma désigné dans l'appareil de gestion de bloc-batterie (130).

3. Système de gestion de batterie (100) selon la revendication 1, l'appareil de gestion de bloc-batterie (130) étant configuré en outre pour stocker des informations sur la longueur des informations de paquet du logiciel embarqué transmises à l'appareil de gestion de module de batterie (120).

4. Système de gestion de batterie (100) selon une quelconque des revendications 1 à 3, l'appareil de gestion de module de batterie (120) étant configuré en outre pour transmettre les informations de données sur la batterie contrôlée à au moins certains des autres appareils de gestion de module de batterie (120).

5. Système de gestion de batterie (100) selon la revendication 4, l'appareil de gestion de module de batterie (120) étant configuré en outre pour coder ensemble les informations de données sur la batterie contrôlée et les informations de paquet de logiciel embarqué divisées reçues afin de générer des informations de codage et transmettre les informations de codage à au moins certains des autres appareils de gestion de module de batterie (120).

6. Système de gestion de batterie (100) selon la revendication 5, l'appareil de gestion de module de batterie (120) étant configuré en outre pour identifier les informations de paquet de logiciel embarqué divisées en utilisant les informations de données sur la batterie et les informations de codage reçues d'un autre appareil de gestion de module de batterie (120).

7. Système de gestion de batterie (100) selon une quelconque des revendications 1 à 6, comprenant en outre :
un contrôleur (310) configuré pour gérer l'appareil de gestion du bloc-batterie (130), et l'un ou plusieurs appareils de gestion du module de batterie (120).

8. Méthode d'utilisation d'un système de gestion de batterie (100), le mode opératoire comprenant :
la division (S210) du logiciel embarqué intégré dans un appareil de gestion de batterie pour générer N informations de paquet divisées du logiciel embarqué ;
la transmission (S221), par l'appareil de gestion du bloc-batterie, des informations du paquet divisées du logiciel embarqué à un ou plusieurs appareils de gestion du module de batterie ; et
le contrôle, par l'un ou plusieurs appareils de gestion de module de batterie, d'un état du module de batterie connecté et la transmission (S222) d'informations de données sur la batterie contrôlée à l'appareil de gestion de bloc-batterie selon un ordre désigné lorsque l'appareil de gestion de bloc-batterie transmet une information de paquet de logiciel embarqué (Pₘ , où 1 ≤ m ≤ N) parmi les éléments d'information de paquet de logiciel embarqué (P₁, P₂, P₃, ...., P_{N}) selon un ordre désigné, et N étant un nombre naturel supérieur ou égal à 2,
la transmission (S222) étant effectuée en un point avant la transmission, par l'appareil de gestion de bloc-batterie, de deuxièmes paquets d'informations de logiciel embarqué (Pₘ₊₁) suivant la transmission d'un premier paquet d'informations de logiciel embarqué (Pₘ) à l'un ou plusieurs appareils de gestion de module de batterie.

9. Méthode d'utilisation selon la revendication 8, comprenant en outre la transmission (S223) du logiciel embarqué non divisé à l'un ou plusieurs appareils de gestion du module de batterie lors de l'entrée d'une commande de téléchargement par lots du logiciel embarqué conformément à un schéma désigné dans l'appareil de gestion de bloc-batterie.

10. Méthode d'utilisation selon la revendication 8, comprenant en outre le stockage, par l'appareil de gestion du bloc-batterie, d'informations sur la longueur du paquet d'informations du logiciel embarqué transmis à l'appareil de gestion du module de batterie.

11. Méthode d'utilisation selon une quelconque des revendications 8 à 10, comprenant en outre la transmission, par l'appareil de gestion du module de batterie, des informations de données sur la batterie contrôlée à au moins certains des autres appareils de gestion de module de batterie.

12. Méthode d'utilisation selon la revendication 11, comprenant :
l'encodage (S224), par l'appareil de gestion du module de batterie, des informations de données sur la batterie contrôlée et des informations de paquet divisées du logiciel embarqué reçues pour générer des informations d'encodage ; et
la transmission (S225) des informations d'encodage à au moins certains des autres appareils de gestion de modules de batterie.

13. Méthode d'utilisation selon la revendication 12, comprenant en outre l'identification (S226), par l'appareil de gestion de module de batterie, des informations de paquet divisées du logiciel embarqué en utilisant les informations de données sur la batterie et les informations d'encodage reçues d'un autre appareil de gestion de module de batterie.
